# EUROPÄISCHE PATENTSCHRIFT

(11) **EP 2 525 146 B1**
(45) Veröffentlichungstag und Bekanntmachung des Hinweises auf die Patenterteilung: **10.07.2019**
(21) Anmeldenummer: 12163463.8
(22) Anmeldetag: 05.04.2012
(51) Int. Cl.: F23C 13/04, F23C 13/02, F23L 7/00, B63G 8/08

(54) **Verfahren zur Verbrennung eines Brennstoff-Sauerstoff-Gemisches**
Method for combusting a fuel-oxygen mixture
Procédé de combustion d'un mélange combustible-oxygène

(30) Priorität: 14.05.2011 DE 102011101616
(43) Veröffentlichungstag der Anmeldung: 21.11.2012
(73) Patentinhaber: ThyssenKrupp Marine Systems GmbH, 24143 Kiel (DE)
(72) Erfinder: Krummrich, Stefan, 24634 Padenstedt (DE)
(74) Vertreter: thyssenkrupp Intellectual Property GmbH

(56) Entgegenhaltungen:
- EP-B1- 1 842 830
- US-A- 4 459 126
- US-A- 5 141 823
- US-A- 6 063 515
- US-A1- 2003 200 699
- US-A1- 2005 227 130
- US-A1- 2009 123 885
- Charles Baukal: "Catalytic Burner" In: "Industrial Burners Handbook", 31 December 2004 (2004-12-31), CRC Press, XP055531430,

## Beschreibung

Die Erfindung betrifft ein Verfahren zur Verbrennung eines Brennstoff-Sauerstoff-Gemisches in einem Unterseeboot.

In Unterseebooten mit einem Brennstoffzellenantrieb wird der zum Betrieb der Brennstoffzellen erforderliche Wasserstoff mittels Methanol-Reformern erzeugt. Zur Bereitstellung der für den Reformierungsprozess erforderlichen Wärme werden sauerstoffbetriebene Hochdruckflammbrenner eingesetzt. Diese Flammbrenner werden mit Methanol und einem schwach energiehaltigen Gas, beispielsweise einem wassserstoff- oder CO-haltigen Gas betrieben. Zum Anfahren des Methanol-Reformers, d. h. zum Aufheizen aller Komponenten des Methanol-Reformers auf Betriebstemperatur, wird allerdings ein Methanol/Sauerstoff-Gemisch in dem Flammbrenner verbrannt.

In militärischen Unterseebooten kann der Flammbrenner nur mit einem sehr geringen Sauerstoffüberschuss betrieben werden, um ein in die Wasserumgebung des Unterseeboots abzugebendes Abgas zu enthalten, das in Seewasser lösbar ist. Aufgrund dieses geringen Sauerstoffüberschusses entstehen sehr hohe Verbrennungstemperaturen von mehr als 2500 ° Celsius. Diese hohen Temperaturen bedingen, dass der Zünder des Flammbrenners nach der Zündung der Flamme nicht in dem Verbrennungsraum des Flammbrenners verbleiben kann. Daher ist der Zünder pneumatisch verfahrbar ausgebildet, um ihn nach der Zündung einer Flamme aus dem Verbrennungsraum des Flammbrenners herausfahren zu können. Diese verfahrbare Ausgestaltung des Zünders erfordert ein vergleichsweise großes Bauvolumen und birgt die Gefahr von Gasleckagen, da der Zünder gegenüber seiner Umgebung in dem Flammbrenner mit einer dynamisch belasteten Dichtung abgedichtet werden muss, wobei die Dichtung nicht nur wegen ihrer dynamischen Belastung, sondern auch wegen der sehr heißen Umgebung beschädigt werden kann.

Des Weiteren erweist sich bei diesem Flammbrenner auch die erforderliche Flammüberwachung als problematisch. Die Flammüberwachung kann wegen der hohen Temperaturen nicht mit Thermoelementen vorgenommen werden. Stattdessen wird hierzu ein optisches Verfahren eingesetzt, bei dem es erforderlich ist, dem Verbrennungsprozess nachteiligerweise auch bei der Verbrennung eines schwachenergetischen Gasgemisches zusätzliches Methanol zuzuführen, um ein ausreichendes lonisierungspotential der Verbrennung und damit einhergehend ein ausreichendes Flammsignal zu erzeugen.

Schließlich gestaltet sich bei dem bekannten Flammbrenner auch die Regelung der Sauerstoffzugabe problematisch. Diese Regelung erfolgt auf der Grundlage der von einem Sauerstoffsensor ausgangsseitig des Flammbrenners ermittelten Sauerstoffwerte. Hierbei kommt es zu langen Regelungstotzeiten von mehr als dreißig Sekunden zwischen der Sauerstoffzugabe und der Sauerstoffmessung, was Schwankungen der Abgaszusammensetzung zur Folge haben kann. Ungünstigenfalls kann das Abgas dann nicht wasserlösliche Komponenten aufweisen, die aber bei einem militärischen Unterseeboot unbedingt zu vermeiden sind, da aufsteigende Gasblasen die Anwesenheit eines getauchten Unterseebootes verraten können. Dokument US5141823 offenbart den Oberbegriff des Anspruchs 1.

Vor diesem Hintergrund liegt der Erfindung die Aufgabe zugrunde, ein Verfahren zur Verbrennung eines Brennstoff-Sauerstoff-Gemisches in einem Unterseeboot zu schaffen, das bzw. die eine Verbrennung auf einem niedrigeren Temperaturniveau als bei dem bekannten Flammbrenner und eine genauere Dosierung der Sauerstoffzugabe ermöglicht.

Gelöst wird diese Aufgabe durch ein Verfahren zur Verbrennung eines Brennstoff-Sauerstoff-Gemisches in einem Unterseeboot mit den in Anspruch 1 angegebenen Merkmalen.

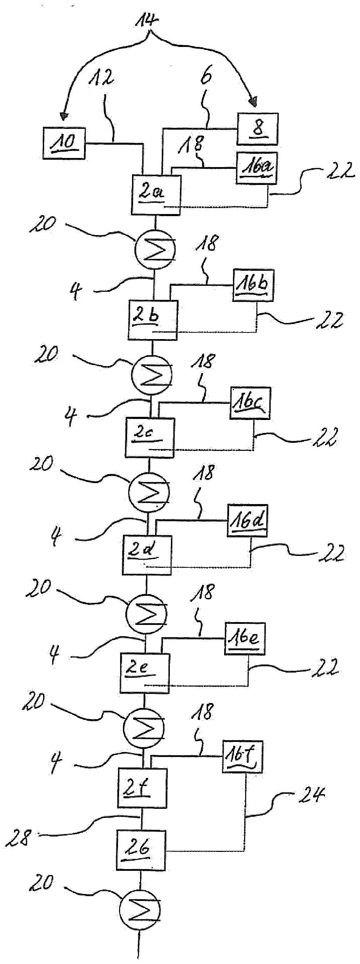

Vorteilhafte Weiterbildungen des Verfahrens nach Anspruch 1 ergeben sich aus den Unteransprüchen, der nachfolgenden Beschreibung sowie der Zeichnung.

Bei dem erfindungsgemäßen Verfahren zur Verbrennung eines Brennstoff-Sauerstoff-Gemisches in einem Unterseeboot erfolgt die Verbrennung mehrstufig und katalytisch. Zunächst wird einem ersten Katalysator ein unterstöchiometrisches Brennstoff-Sauerstoff-Gemisch zugeführt. Bei dem Brennstoff kann es sich grundsätzlich um alle Flüssigbrennstoffe und gasförmigen Brennstoffe auf Kohlenwasserstoffbasis handeln, wobei die Flüssigbrennstoffe vor Beaufschlagung auf dem Katalysator verdampft werden müssen. Bevorzugt wird allerdings Methanol als Brennstoff verwendet, also dem ersten Katalysator ein unterstöchiometrisches Methanol-Sauerstoff-Gemisch zugeführt. Das Brennstoff-Sauerstoff-Gemisch wird in Gegenwart des Katalysators verbrannt, das heißt, es findet eine Oxydation von brennbaren Gasbestandteilen statt.

Da das dem ersten Katalysator zugeführte Brennstoff-Sauerstoff-Gemisch unterstöchiometrisch ist, wird dort nur ein Teil des Brennstoffs oxidiert. Der übrige, überschüssige Brennstoff wird aufgrund der in dem Katalysator herrschenden Temperatur zu einem brennbaren Produktgas, beispielsweise zu einem Gemisch aus Wasserstoff und Kohlenstoffmonoxid umgesetzt. Dieses Produktgas wird mindestens einem weiteren Katalysator zugeführt, wo es unter Zuführung von Sauerstoff verbrannt wird.

Vorzugsweise ist die dem zweiten Katalysator zugeführte Sauerstoffmenge so bemessen, dass die Verbrennung auch in diesem Katalysator unterstöchiometrisch abläuft, sodass auch hier nur ein Teil des Brennstoffs oxidiert und das übrige Produktgas mindestens einem weiteren Katalysator zugeführt wird, wo es unter Zugabe von Sauerstoff verbrannt wird. Vorteilhafterweise führt die exotherme Oxydations-Reaktion in den einzelnen Katalysatoren zu einer Aufheizung der einzelnen Katalysatoren auf ein Temperaturniveau, das deutlich unter dem Temperaturniveau bei der Verbrennung in dem bekannten Flammbrenner liegt. Aufgrund des mehrstufigen Prozessablaufes, bei dem jedem beteiligten Katalysator eine kleinere Menge Sauerstoff zugeführt wird, lässt sich der benötigte Sauerstoff im Vergleich zu dem bekannten Flammbrenner deutlich genauer dosieren, sodass das Abgas am Ende des Prozesses einen deutlich geringeren Anteil von in Seewasser nicht löslichen Bestandteilen als bei dem Flammbrenner aufweist. Die in den Katalysatoren erzeugte Wärme kann über Wärmetauscher abgeführt werden und einer Wärme benötigenden Anlage als Nutzwärme zugeführt werden.

Bevorzugt wird das Brennstoff-Sauerstoff-Gemisch bei dem erfindungsgemäßen Verfahren in mehr als zwei in Reihe hintereinander angeordneten, miteinander strömungsverbundenen Katalysatoren verbrannt. Hierbei läuft die Verbrennung vorteilhafterweise zunächst in mehreren hintereinander angeordneten Katalysatoren unterstöchiometrisch und in einem letzten Katalysator stöchiometrisch ab. Dementsprechend ist die dem Produktgas in dem zweiten Katalysator und den darauf folgenden Katalysatoren mit Ausnahme des letzten Katalysators zugeführte Sauerstoffmenge so bemessen, dass jeweils nur ein Teil des Produktgases verbrennt, während dem Produktgas in dem letzten Katalysator exakt so viel Sauerstoff hinzugefügt wird, dass das Produktgas in diesem letzten Katalysator im Wesentlichen vollständig, unter Bildung eines in Seewasser löslichen Abgases verbrennt.

Da der Oxydationsprozess erst bei einer Temperatur des Brennstoff-Sauerstoff-Gemisches ausgelöst wird, die in der Regel höher als die Temperatur des dem ersten Katalysator zugeführten Brennstoff-Sauerstoff-Gemisches ist, wird der erste Katalysator und damit einhergehend das in dem Katalysator befindliche Brennstoff-Sauerstoff-Gemisch bevorzugt elektrisch aufgeheizt, bis die zur Auslösung des Oxydationsprozesses erforderliche Temperatur erreicht ist. In den weiteren, auf den ersten Katalysator folgenden Katalysatoren ist eine Aufheizung nicht mehr erforderlich, da das diesen Katalysatoren zugeführte Produktgas bereits ausgangsseitig des ersten Katalysators die zum Auslösen einer exothermen Oxydations-Reaktion erforderliche Temperatur aufweist.

Erfindungsgemäß wird die dem mindestens einen weiteren Katalysator zugeführte Sauerstoffmenge auf der Grundlage der Temperatur des Produktgases ausgangsseitig des Katalysators eingestellt. D. h., zwischen den direkt aufeinander folgenden Katalysatoren wird die Temperatur des Produktgases ermittelt. Hierbei wird die dem Katalysator zugeführte Sauerstoffmenge so eingestellt, dass die Betriebstemperatur des in dem Katalysator ablaufenden Verbrennungsprozesses eine maximal zugelassene Betriebstemperatur des Katalysators nicht überschreitet. Falls das Temperaturniveau des Verbrennungsprozesses einen zulässigen Wert zu überschreiten droht, kann dem Brennstoff-Sauerstoff-Gemisch bzw. kann dem Produktgas gegebenenfalls Wasser beigemischt werden, um den Temperaturanstieg während des Verbrennungsprozesses in einem gewünschten Rahmen zu halten.

Insbesondere bei Einsatz des erfindungsgemäßen Verfahrens in einem Unterseeboot ist sicherzustellen, dass das aus dem Unterseeboot in dessen Umgebung abgeleitete Abgas möglichst wenig Bestandteile aufweist, die in Seewasser nicht löslich sind. Zu diesen Abgasbestandteilen gehört auch reiner Sauerstoff. Daher wird vorteilhafterweise die einem letzten Katalysator zugeführte Sauerstoffmenge auf der Grundlage einer in dem Produktgas ausgangsseitig des letzten Katalysators ermittelten Sauerstoffmenge eingestellt. Demzufolge wird ausgangsseitig des letzten Katalysators der Sauerstoffanteil des austretenden Abgases ermittelt. Auf der Grundlage dieses gemessenen Sauerstoffanteils wird die dem letzten Katalysator zuzuführende Sauerstoffmenge eingestellt, die so bemessen ist, dass bei einer stöchiometrischen Verbrennung des Produktgases in dem letzten Katalysator möglichst kein reiner Sauerstoff in dem Abgas verbleibt.

Wie bereits angemerkt worden ist, wird bei dem erfindungsgemäßen Verfahren angestrebt, dass die Prozesstemperatur ein bestimmtes Temperaturniveau nicht übersteigt. Um dies zu erreichen, ist neben der temperaturabhängigen Sauerstoffversorgung der einzelnen Katalysatoren bevorzugt auch vorgesehen, das Produktgas ausgangsseitig der Katalysatoren zu kühlen. Diese Kühlung wird also in dem Produktgasstrom zwischen benachbarten Katalysatoren vorgenommen, wobei dem Produktgasstrom über einen durch den Produktgasstrom geleiteten Kühlmittelstrom Wärme entzogen wird. Die dem Produktgasstrom entzogene Wärme stellt die Nutzwärme dar, die beliebigen aufzuheizenden Anlagen bzw. Anlagenkomponenten zugeführt wird.

Erfindungsgemäß ist das Verfahren zur Verbrennung eines Brennstoff-Sauerstoff-Gemisches zum Aufheizen eines Methanol-Reformers vorgesehen. Hierbei wird die für den Reformierungsprozess in dem Methanol-Reformer erforderliche Wärme von dem erfindungsgemäßen Verfahren bereitgestellt, indem die dem Produktgasstrom zwischen benachbarten Katalysatoren entzogene Wärme dem Methanol-Reformer zugeführt wird.

Erfindungsgemäß ist dem ersten Katalysator mindestens ein weiterer Katalysator nachgeschaltet, der zur Zuführung von Sauerstoff mit einer Sauerstoffversorgung leitungsverbunden ist. Besonders vorteilhaft sind dem ersten Katalysator mehrere Katalysatoren in Reihe nachgeschaltet, die jeweils mit einer Sauerstoffversorgung und vorzugsweise jeweils mit einer ihnen speziell zugeordneten Sauerstoffversorgung leitungsverbunden sind.

Die Anzahl der eingesetzten Katalysatoren ist grundsätzlich beliebig und richtet sich vor allem nach der mit der Vorrichtung zu erzeugenden Wärmemenge. Insbesondere, wenn die Vorrichtung zur Verbrennung eines Brennstoff-Sauerstoff-Gemisches Teil eines Methanol-Reformers in einem Unterseeboot bildet und dort einen bislang zur Wärmeerzeugung eingesetzten Flammbrenner ersetzen soll, weist sie vorzugsweise sechs hintereinander angeordnete Katalysatoren auf, da es sich gezeigt hat, dass die Vorrichtung dann einerseits die für den Reformierungsprozess erforderliche Wärmemenge bereitstellen kann, wobei aber andererseits die Betriebstemperaturen in den einzelnen Katalysatoren vergleichsweise gering gehalten werden können.

Zum Aufheizen des Brennstoff-Sauerstoff-Gemisches auf die den Oxydationsprozess auslösende Temperatur in dem ersten Katalysator ist ein Katalysatorbett des ersten Katalysators elektrisch beheizbar. So kann in dem Katalysator eingangsseitig des Katalysatorbettes ein elektrisches Heizelement, beispielsweise eine elektrische Heizwendel angeordnet sein, die derart ausgelegt ist, dass das Brennstoff-Sauerstoff-Gemisch auf die zur Auslösung des Oxydationsprozesses erforderliche Temperatur, die beispielsweise bei einem Methanol-Sauerstoff-Gemisch in einem Temperaturbereich von etwa 60° Celsius - 100 ° Celsius liegen kann, aufgeheizt wird.

Bei der Vorrichtung sind bevorzugt alle in Reihe hintereinander angeordneten Katalysatoren mit einer Sauerstoffversorgung leitungsverbunden. Zweckmäßigerweise weisen diese mit den Katalysatoren leitungsverbundenen Sauerstoffversorgungen eine Einrichtung zur Regelung der Sauerstoffzufuhrmenge auf, die mit Mitteln zur Erfassung der Temperatur des Produktgases signalverbunden ist. Die Mittel zur Erfassung der Temperatur des Produktgases, bei denen es sich aufgrund der vergleichsweise geringen Prozesstemperatur in der Vorrichtung vorteilhafterweise um Thermoelemente handeln kann, sind bevorzugt ausgangsseitig des jeweiligen mit Sauerstoff zu versorgenden Katalysators angeordnet. In der Einrichtung zur Regelung der Sauerstoffzufuhrmenge wird die Sauerstoffmenge derart eingestellt, dass in dem Katalysator mit Ausnahme des letzten Katalysators der Vorrichtung eine unterstöchiometrische Verbrennung abläuft und die Prozesstemperatur in dem betreffenden Katalysator einen vorgegebenen Grenzwert nicht übersteigt.

Anders als bei den in Richtung des Prozessablaufs vor ihr angeordneten Sauerstoffversorgungen ist die Einrichtung zur Regelung der Sauerstoffzufuhrmenge der mit dem in Durchströmrichtung letzten Katalysator leitungsverbundenen Sauerstoffversorgung bevorzugt mit einem Sauerstoffsensor signalverbunden. Dieser Sauerstoffsensor ist zweckmäßigerweise in Durchströmrichtung hinter dem letzten Katalysator also in einer Abgasleitung der Vorrichtung angeordnet und erfasst den Sauerstoffanteil des aus dem letzten Katalysator austretenden Abgases. In der mit dem Sauerstoffsensor signalverbundenen Einrichtung zur Regelung der Sauerstoffzufuhrmenge wird die dem letzten Katalysator zuzuführende Sauerstoffmenge auf der Grundlage der von dem Sauerstoffsensor ermittelten Daten derart eingestellt, dass in dem Katalysator eine stöchiometrische, also vollständige Verbrennung abläuft und der Anteil reinen Sauerstoffs in dem Abgas möglichst gering gehalten wird.

In einer vorteilhaften Weiterbildung der Vorrichtung sind zwischen benachbarten Katalysatoren Wärmetauscher zur Kühlung des Produktgases angeordnet. Das heißt, in der Strömungsverbindung zwischen zwei benachbarten Katalysatoren ist jeweils in dem Produktgasstrom ein Wärmetauscher angeordnet, der dem Produktgas Wärme entzieht, sodass die Prozesstemperatur in der erfindungsgemäßen Vorrichtung permanent auf einem Temperaturniveau gehalten wird, das unkritisch für die Katalysatoren und die in der Vorrichtung eingebauten Sensoren, wie Thermoelemente und Sauerstoffsensoren ist. Daher können diese Sensoren vorteilhafterweise direkt hinter den Katalysatoren angeordnet werden, sodass zwischen der Datenerfassung durch die Sensoren und der Regelung der Sauerstoffzufuhr nur zu vernachlässigende Totzeiten bestehen, wodurch eine vergleichsweise hohe Regelgenauigkeit bezüglich der zugeführten Sauerstoffmenge gewährleistet wird.

Nachfolgend ist die Erfindung anhand eines in der Zeichnung dargestellten Ausführungsbeispiels näher erläutert. Die Zeichnung zeigt in einem schematisch vereinfachten Blockdiagram eine Vorrichtung zur Verbrennung eines Brennstoff-Sauerstoff-Gemisches.

Die dargestellte Vorrichtung zur Verbrennung eines Brennstoff-Sauerstoff-Gemisches dient zur Aufheizung aller Komponenten eines in der Zeichnung nicht dargestellten Methanol-Reformers. Sie weist sechs Katalysatoren 2a, 2b, 2c, 2d, 2e und 2f auf. Diese Katalysatoren 2a, 2b, 2c, 2d, 2e und 2f sind hintereinander in Reihe angeordnet und jeweils über eine Überströmleitung 4 miteinander strömungsverbunden.

Der erste Katalysator 2a ist über eine Zuführleitung 6 mit einer MethanolVersorgung 8 leitungsverbunden. Das dem Katalysator 2a zugeführte Methanol dient als Brennstoff. Darüber hinaus wird in den Katalysator 2a auch von dem Methanol-Reformer bereitgestelltes Schwachgas als Brennstoff zugeführt. Hierzu ist eine Schwachgasversorgung 10 über eine Zuführleitung 12 mit dem Katalysator 2a leitungsverbunden. Zusammen bilden die Methanolversorgung 8 und die Schwachgasversorgung 10 eine Brennstoffversorgung 14 der Vorrichtung zur Verbrennung eines Brennstoff-Sauerstoff-Gemisches. Der zur Verbrennung erforderliche Sauerstoff wird von einer Sauerstoffversorgung 16a bereitgestellt, die über eine Zuführleitung 18 mit dem Katalysator 2a leitungsverbunden ist.

Die auf den Katalysator 2a folgenden Katalysatoren 2b, 2c, 2d, 2e und 2f werden ebenfalls von Sauerstoffversorgungen 16b, 16c, 16d, 16e und 16f mit Sauerstoff versorgt und sind zu diesem Zweck jeweils über Zuführleitungen 18 mit den jeweiligen Katalysatoren 2a, 2b, 2c, 2d, 2e und 2f leitungsverbunden.

In den Überströmleitungen 4 zwischen direkt benachbarten Katalysatoren 2a, 2b, 2c, 2d, 2e und 2f sowie ausgangsseitig des Katalysators 2f ist jeweils ein Wärmetauscher 20 angeordnet. Mit diesen Wärmetauschern 20 wird dem Produktgas- bzw. Abgasstrom Wärme entzogen, die anschließend an einen aus der Zeichnung nicht ersichtlichen Methanol-Reformer weitergeleitet wird.

Jede der Sauerstoffversorgungen 16a, 16b, 16c, 16d, 16e und 16f ist mit einer nicht dargestellten Einrichtung zur Regelung der Sauerstoffzufuhrmenge ausgestattet. Diese Einrichtungen zur Regelung der Sauerstoffzufuhrmenge der Sauerstoffversorgungen 16a, 16b, 16 c, 16d und 16e sind jeweils mit Mitteln zur Erfassung der Temperatur des Produktgases in Form eines Thermoelements 22 signalverbunden.

Anders als die Einrichtungen zur Regelung der Sauerstoffzufuhrmenge, der Sauerstoffversorgungen 16a, 16b, 16c, 16d und 16e ist die Einrichtung zur Regelung der Sauerstoffzufuhrmenge, der Sauerstoffversorgung 16f mit einem Sauerstoffsensor 26 über eine Signalleitung 24 signalverbunden. Der Sauerstoffsensor 26 ist ausgangsseitig des Katalysators 2f in einer Abgasleitung 28 angeordnet.

Die Funktionsweise der dargestellten Vorrichtung zur Verbrennung eines Brennstoff-Sauerstoff-Gemisches ist wie folgt:
Zunächst wird in den ersten Katalysator 2a von der Methanolversorgung 8 über die Zuführleitung 6 Methanol, von der Schwachgasversorgung 10 über die Zuführleitung 12 Schwachgas und von der Sauerstoffversorgung 16a über die Zuführleitung 18 Sauerstoff eingeleitet. Das Methanol wird in den Katalysator 2a in flüssiger Form eingeleitet und muss für den in dem Katalysator 2a ablaufenden katalytischen Verbrennungsprozess verdampft werden. Hierzu wird der erste Katalysator 2a mittels eines in der Zeichnung nicht dargestellten elektrischen Heizelements, das eingangsseitig des Katalysatorbettes des Katalysators 2a angeordnet ist, auf eine Temperatur von ungefähr 100° Celsius aufgeheizt.

Die von der Sauerstoffversorgung 16a in den Katalysator 2a eingeleitete Sauerstoffmenge ist so bemessen, dass die Verbrennung in dem Katalysator 2a unterstöchiometrisch abläuft. Dies hat zur Folge, dass in dem Katalysator 2a nur ein Teil des Methanols und Schwachgases als Brennstoff oxydiert. Der übrige, überschüssige Brennstoff wird aufgrund der in dem Katalysator 2a herrschenden Temperatur zu einem Gemisch aus Wasserstoff und Kohlenstoffmonoxid als Produktgas umgesetzt. Dieses brennbare Produktgas wird über die Überströmleitung 4 in den Katalysator 2b geleitet und dort mit Sauerstoff aus der Sauerstoffversorgung 16b ebenfalls unterstöchiometrisch verbrannt. Diese unterstöchiometrische Verbrennung des Produktgases wiederholt sich in den Katalysatoren 2c, 2d und 2e, wobei diesen Katalysatoren 2c, 2d und 2e von den Sauerstoffversorgungen 16c, 16d und 16e die entsprechende Sauerstoffmenge zugeführt wird.

Hierbei wird die den Katalysatoren 2a, 2b, 2c, 2d und 2e zuzuführende Sauerstoffmenge von den jeweiligen Einrichtungen zur Regelung der Sauerstoffzufuhrmenge der Sauerstoffversorgungen 16a, 16b, 16c, 16d und 16e so eingestellt, dass die Betriebstemperatur der in den Katalysatoren 2a, 2b, 2c, 2d und 2e ablaufenden Verbrennungsprozesse eine maximal mögliche Betriebstemperatur nicht überschreitet. Zu diesem Zweck wird die Temperatur in einem Ausgangsbereich der Katalysatoren 2a, 2b, 2c, 2d und 2e mit den Thermoelementen 22 gemessen und die von den Sauerstoffversorgungen 16a, 16b, 16c, 16d und 16e abzugebenden Sauerstoffzufuhrmengen auf der Grundlage der von den Thermoelementen 22 ermittelten Temperaturwerten eingestellt.

Eine weitere Maßnahme zur Verhinderung überhöhter Temperaturen in der Vorrichtung besteht darin, dass dem Produktgasstrom in den Überströmleitungen 4 zwischen den Katalysatoren 2a, 2b, 2c , 2d, 2e und 2f die zur Aufheizung des Methanolreformers erforderliche Wärme mittels der Wärmetauscher 20 entzogen wird.

In dem in Strömungsrichtung letzten Katalysator 2f der Vorrichtung ist eine vollständige Verbrennung des Produktgases vorgesehen. Daher wird die der Sauerstoffversorgung 16f dem Katalysator 2f zugeführte Sauerstoffmenge derart eingestellt, dass der Oxydationsprozess in dem Katalysator 2f stöchiometrisch abläuft. Da die in der Zeichnung dargestellte Vorrichtung zum Einsatz in einem militärischen Unterseeboot vorgesehen ist, ist Sauerstoff als in Seewasser nicht lösliches Gas nicht erwünscht. Daher wird die dem Katalysator 2f zugeführte Sauerstoffmenge auf der Grundlage des von dem Sauerstoffsensor 26 in der Abgasleitung 28 ermittelten Sauerstoffanteils im Abgas von der Einrichtung zur Regelung der Sauerstoffzufuhrmenge der Sauerstoffversorgung 16f auch so eingestellt, dass der Sauerstoffanteil in dem Abgas vernachlässigbar klein ist.

### Bezugszeichenliste

- 2a, 2b, 2c, 2d, 2e, 2f: - Katalysator
- 4: - Überströmleitung
- 6: - Zuführleitung
- 8: - Methanolversorgung
- 10: - Schwachgasversorgung
- 12: - Zuführleitung
- 14: - Brennstoffversorgung
- 16a, 16b, 16c, 16d, 16e, 16f: - Sauerstoffversorgung
- 18: - Zuführleitung
- 20: - Wärmetauscher
- 22: - Thermoelement
- 24: - Signalleitung
- 26: - Sauerstoffsensor
- 28: - Abgasleitung

## Patentansprüche

1. Verfahren zur Verbrennung eines Methanol-Sauerstoff-Gemisches in einem Unterseeboot und vorgesehen zum Aufheizen eines in dem Unterseeboot befindlichen Methanol-Reformers, bei dem einem ersten Katalysator (2a) ein unterstöchiometrisches Methanol-Sauerstoff-Gemisch zugeführt wird und in dem Katalysator (2a) katalytisch verbrannt wird, wobei überschüssiger Methanol zu einem Produktgas enthaltend Kohlenmonoxid und Wasserstoff umgesetzt wird und das Produktgas mindestens einem weiteren Katalysator (2b, 2c, 2d, 2e, 2f) zugefügt wird, wo es unter Zuführung von Sauerstoff verbrannt wird, wobei die Verbrennung in mehreren hintereinander angeordneten Katalysatoren (2a, 2b, 2c, 2d, 2e) unterstöchiometrisch und in einem letzten Katalysator (2f) stöchiometrisch abläuft und das Abgas des letzten Katalysators in Seewasser zur Lösung abgegeben wird, **dadurch gekennzeichnet, dass** der erste Katalysator und damit einhergehend das darin befindliche Methanol-Sauerstoff-Gemisch elektrisch aufgeheizt wird, bis die zur Auslösung des Oxydationsprozesses erforderliche Temperatur erreicht ist und
die einem weiteren Katalysator (2b, 2c, 2d, 2e) zugeführte Sauerstoffmenge auf der Grundlage der Temperatur des Produktgases ausgangsseitig des Katalysators (2b, 2c, 2d, 2e) eingestellt wird.

2. Verfahren nach einem der vorangehenden Ansprüche, bei dem die einem letzten Katalysator (2f) zugeführte Sauerstoffmenge auf der Grundlage einer in dem Produktgas ausgangsseitig des letzten Katalysators (2f) ermittelten Sauerstoffmenge eingestellt wird.

3. Verfahren nach einem der vorangehenden Ansprüche, bei dem das Produktgas ausgangsseitig der Katalysatoren (2a, 2b, 2c, 2d, 2e) gekühlt wird.

## Claims

1. Method for burning a methanol-oxygen mixture in a submarine and intended for heating a methanol reformer located in the submarine, in which a sub-stoichiometric methanol-oxygen mixture is fed to a first catalyst (2a) and is catalytically burnt in the catalyst (2a), with excess methanol being converted into a product gas containing carbon monoxide and hydrogen and the product gas being fed to at least one further catalyst (2b, 2c, 2d, 2e, 2f) where it is burnt with introduction of oxygen and the combustion proceeding substoichiometrically in a plurality of catalysts (2a, 2b, 2c, 2d, 2e) arranged in series and stoichiometrically in a last catalyst (2f) and the offgas from the last catalyst being released into seawater for dissolution, **characterized in that** the first catalyst and thus the methanol-oxygen mixture present therein is electrically heated until the temperature required for triggering the oxidation process has been reached and
the amount of oxygen fed to a further catalyst (2b, 2c, 2d, 2e) is set on the basis of the temperature of the product gas on the exit side of the catalyst (2b, 2c, 2d, 2e).

2. Method according to one of the preceding claims, wherein the amount of oxygen fed to a last catalyst (2f) is set on the basis of an amount of oxygen determined in the product gas on the exit side of the last catalyst (2f).

3. Method according to either of the preceding claims, wherein the product gas is cooled on the exit side of the catalysts (2a, 2b, 2c, 2d, 2e).

## Revendications

1. Procédé de combustion d'un mélange de méthanol et d'oxygène dans un sous-marin, prévu pour chauffer un reformeur de méthanol se trouvant dans le sous-marin, dans lequel un mélange sous-stoechiométrique de méthanol et d'oxygène est acheminé à un premier catalyseur (2a) et est brûlé par voie catalytique dans le catalyseur (2a), le méthanol en excès étant converti en un produit gazeux contenant du monoxyde de carbone et de l'hydrogène et le produit gazeux étant acheminé à au moins un catalyseur supplémentaire (2b, 2c, 2d, 2e, 2f) où il est brûlé avec apport d'oxygène, la combustion se déroulant de manière sous-stoechiométrique dans plusieurs catalyseurs (2a, 2b, 2c, 2d, 2e) disposés les uns derrière les autres et de manière stoechiométrique dans un dernier catalyseur (2f) et le gaz d'échappement du dernier catalyseur étant déchargé dans l'eau de mer en vue de sa dissolution, **caractérisé en ce que** le premier catalyseur, et donc le mélange de méthanol et d'oxygène s'y trouvant, est chauffé électriquement jusqu'à ce que la température nécessaire au déclenchement du processus d'oxydation soit atteinte et
la quantité d'oxygène acheminée à un catalyseur supplémentaire (2b, 2c, 2d, 2e) est ajustée sur la base de la température du produit gazeux du côté de la sortie du catalyseur (2b, 2c, 2d, 2e).

2. Procédé selon l'une quelconque des revendications précédentes, dans lequel la quantité d'oxygène acheminée à un dernier catalyseur (2f) est ajustée sur la base d'une quantité d'oxygène déterminée dans le produit gazeux du côté de la sortie du dernier catalyseur (2f).

3. Procédé selon l'une quelconque des revendications précédentes, dans lequel le produit gazeux est refroidi du côté de la sortie des catalyseurs (2a, 2b, 2c, 2d, 2e).
